## Europäisches Patentamt

## European Patent Office

## Office européen des brevets

(19)

(11) Veröffentlichungsnummer: **0 237 603**
**B1**

(12) # EUROPÄISCHE PATENTSCHRIFT

(45) Veröffentlichungstag der Patentschrift:
**20.07.88**

(51) Int. Cl.⁴: **B 23 Q 11/00**

(21) Anmeldenummer: **86103817.2**

(22) Anmeldetag: **20.03.86**

(54) Späneabförderer für Maschinen, die eine spanabhebende Bearbeitung von insbesondere metallischen Werkstücken durchführen.

(43) Veröffentlichungstag der Anmeldung:
**23.09.87 Patentblatt 87/39**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**DE-A-2 048 260**
**DE-A-3 345 041**
**DE-C-881 932**
**FR-A-2 481 681**
**GB-A-2 056 399**

(73) Patentinhaber: **Julius Maschinenbau GmbH,
Zeisigweg 16, D-5603 Wülfrath (DE)**

(72) Erfinder: **Julius, Rolf, Zeisigweg 16, D-5603
Wülfrath (DE)**

(74) Vertreter: **Patentanwälte Schulze Horn und
Hoffmeister, Goldstrasse 36, D-4400 Münster (DE)**

## Beschreibung

Die Erfindung betrifft einen Späneabförderer für Maschinen, die eine spanabhebende Bearbeitung von insbesondere metallischen Werkstücken durchführen, wie Strehlmaschinen, Drehmaschinen usw., wobei der Späneabförderer eine um ihre Längsachse rotierende gestreckte Wendel mit im Abstand zueinander verlaufenden Windungen aufweist, deren freies oberes Ende in den Spanaustrittsbereich des spanerzeugenden Werkzeuges der Maschine ragt, und mittels derer die erzeugten Späne zur Sicherstellung eines unbehinderten Bearbeitungsablaufes aus der Werkzeugumgebung abgefördert werden, wobei die Wendel als Hohlwendel ausgebildet ist und außenseitig unter Ausbildung eines engen Zwischenraumes von einem unverdrehbaren Führungsrohr umgeben ist.

Ein Späneabförderer der genannten Art ist aus der DE-A-2 048 260 bekannt. Bei diesem Späneabförderer kommt es jedoch leicht zu einem Mitdrehen von Späneknäueln mit der Wendel, ohne daß eine Weiterförderung erfolgt.

Aus der GB-A-2 056 399 ist weiterhin ein Späneabförderer bekannt, der mit einer Schnecke arbeitet und zur Vermeidung des Mitdrehens von Späneknäueln einen nur einen engen Zwischenraum zur Schnecke ausbildenden Keil aufweist. Nachteilig kann dieser Förderer aber nur horizontal arbeiten und vermag das Einziehen von Späneknäueln ebenfalls nicht sicher verhindern.

Es stellt sich daher die Aufgabe, einen Späneabförderer der eingangs genannten Art zu schaffen, der die aufgeführten Nachteile vermeidet, und der eine zuverlässige, störungs- und unterbrechungsfreie Abförderung von Spänen gewährleistet, ohne daß manuelle Eingriffe erforderlich sind. Weiterhin soll der Späneabförderer verschleißarm sein und an unterschiedliche Maschinen und Werkzeuge angepaßt werden können.

Die Lösung dieser Aufgabe gelingt erfindungsgemäß durch einen Späneabförderer der eingangs genannten Art, der dadurch gekennzeichnet ist, daß das Führungsrohr mit einem in Rohrlängsrichtung verlaufenden, nach oben offenen Schlitz versehen ist, wobei das obere Ende der Wendel frei aus dem Rohr herausragt und daß sich der Schlitz im unteren, werkzeugfernen Teil des Rohres aus der Längsrichtung des Rohres in einer mehr in Umfangsrichtung des Rohres und in Rotationsrichtung der Wendel verlaufenden Richtung mit einer zur Steigung der Wendel entgegengesetzten Steigung fortsetzt.

Bei dem Späneabförderer gemäß Erfindung wird durch die besondere Ausgestaltung der Wendel und des diese umgebenden Führungsrohres erreicht, daß die am Werkzeug anfallenden Späne sicher von der Wendel erfaßt und - durch den Schlitz im Führungsrohr gegen ein Mitdrehen gesichert - abgefördert werden.

Am unteren Ende der Wendel erfolgt im Zusammenwirken mit dem Ende des Schlitzes ein Abscheren der transportierten Späne, wonach die außerhalb der Wendel bzw. des Führungsrohres befindlichen Späneteile entlang der Außenseite des Späneabförderers frei nach unten abfallen können. Die im Inneren der hohlen Wendel befindlichen Späneteile können aufgrund der hohlen Ausbildung der Wendel durch den derart gebildeten innenliegenden Hohlraum herabfallen. Damit wird die Bildung von Spänestaus am unteren Ende der Wendel zuverlässig verhindert. Durch die Zerkleinerung der Späne wird zudem das Volumen des Spanabfalles vorteilhaft verringert. Da es damit nicht zu einer größeren Bremswirkung auf die Wendel kommen kann, werden deren Antrieb und Lagerung geschont und erreichen so bei gleicher oder sogar leichterer Ausführung eine höhere Betriebssicherheit und Lebensdauer.

Da sich der Schlitz im unteren, werkzeugfernen Teil des Rohres aus der Längsrichtung des Rohres in einer mehr in Umfangsrichtung des Rohres und in Rotationsrichtung der Wendel verlaufenden Richtung mit einer zur Steigung der Wendel entgegengesetzten Steigung fortsetzt, wird ein Verlauf des Abschervorganges nach Art der Betätigung einer Schere erreicht, was den erforderlichen Kraft- bzw. Drehmomentaufwand und den Verschleiß der beteiligten Teile des Späneabförderers verringert.

In weiterer Ausgestaltung kann die untere Fortsetzung des Schlitzes mit einer der Wendel zugewandten Schneidkante versehen sein. Diese sorgt für eine weiter verbesserte Scher- bzw. Schneidwirkung beim Zertrennen der Späne. Um eine lange Standzeit der Schneidkante im Schlitz zu sichern, kann diese als Hartmetallteil an der entsprechenden Stelle in das Führungsrohr eingesetzt sein. Ebenso kann die der Schneidkante im Schlitz gegenüberliegende und mit dieser zusammenwirkende Kante der Wendel mit einem Hartmetalleinsatz bestückt sein.

Um ein sicheres Einziehen der von dem oberen Ende der Wendel erfaßten Späne in den Schlitz des Führungsrohres zu gewährleisten, ist vorgesehen, daß das obere Ende des Rohres wendelartig mit einer der Steigung der Wendel entgegengesetzten Steigung abgeschnitten ist, derart, daß sich im Bereich des Schlitzes ein Höhensprung des Rohrendes ergibt, wobei die Wendel bei ihrer Rotation auf den höheren Rohrbereich zuläuft. Hiermit wird ein Rotieren von Spänen spätestens nach einem Umlauf der Spirale beendet und es wird für eine zügige Abführung der Späne aus dem Werkzeugbereich gesorgt.

Als günstig, insbesondere was Funktionssicherheit und Stabilität betrifft, haben sich Ausführungen des Späneabziehers erwiesen, bei denen die Breite des Schlitzes im Führungsrohr etwa das 0,05 - 0,2fache des Umfanges des Rohres beträgt und bei denen die Länge der unteren Fortsetzung des Schlitzes etwa das 0,25 - 0,5fache des Umfanges des Rohres beträgt. Für die Gestaltung der Wendel hat sich als besonders vorteilhaft im Blick auf Festigkeit und Zuverlässigkeit der Funktion erwiesen, daß der Querschnitt der einzelnen Windungen rechteckig ist, wobei die äußere Seite in engem bis minimalem Abstand parallel zur Innenseite des Führungsrohres verläuft.

Zur Vermeidung von Späneansammlungen im hohlen Fußteil der Wendel, die möglicherweise zu Funktionsbeeinträchtigungen führen könnten, ist vorgesehen, daß die Wendel einen sich erweiternden, hohlen Fußteil aufweist, der außenseitig von einem sich entsprechend erweiternden Rohrfußteil umgeben ist. Damit bleibt ein ungestörter Durchgang der Späne durch den hohlen Fußteil der Wendel gesichert, auch wenn es nach dem Durchtrennen von Spänen zur Entspannung von eventuell vorher vorhandenen mechanischen Spannungen mit damit einhergehender Volumenvergrößerung des Spänegemenges kommt.

Da die Wendel im Betrieb eine Rotationsbewegung ausführt, ist eine entsprechende Lagerung sowie ein Antrieb erforderlich. Hierdurch darf aber zur Sicherstellung eines störungsfreien Betriebes der Spänetransport nicht behindert werden. Es ist deshalb vorgesehen, daß unterhalb des Fußteils der Wendel mit dieser einstückige oder kraftschlüssig verbundene, im wesentlichen hohlzylinderförmige Lager- und Antriebsglieder angeordnet sind. Damit bleibt der im vorangehenden Absatz beschriebene freie Durchgang für die Späneteile aus dem Inneren der Wendel auch im Bereich der Lagerung und des Antriebes erhalten. Zugleich stören diese Teile des Späneabförderers bei der beschriebenen Anordnung nicht bei beengten Einbauverhältnissen im Bereich des Werkzeuges. Die Lagerglieder können beispielsweise mit auf ihre Außenseite aufgesetzten Wälzlagern versehen sein, die eine sehr geringe Reibung auch bei starker Belastung aufweisen. Das Antriebsglied kann beispielsweise auf seiner Außenseite mit Zähnen für den Eingriff eines Zahnrades oder einer Antriebskette versehen sein.

Um den Späneabförderer an unterschiedliche Werkzeuge und Werkzeuglagen anpassen zu können, weist dieser vorzugsweise Mittel zur Höhenverstellung gegenüber dem Werkstück und/oder dem spanerzeugenden Werkzeug auf. Zur Erweiterung der Anpassungsmöglichkeiten kann der Späneabförderer darüber hinaus noch mit Mitteln zur horizontalen Verschiebung gegenüber dem Werkstück und/oder dem spanerzeugenden Werkzeug und/oder mit Mitteln zur Neigungsverstellung seiner Längsachse gegenüber der Vertikalen ausgestattet sein.

Schließlich sind zur Kühlung und Reibungsverminderung der gegeneinanderbewegten Teile des Späneabförderers Mittel zur Zuführung und Ausbringung von Kühl- und Gleitflussigkeit in den Bereich zwischen Wendel und Rohrinnenseite und/oder den Bereich der Schneidkanten am Schlitz des Rohres vorgesehen, die insbesondere bei der Abförderung großer Mengen von Spänen oder von Spänen aus besonders zähem Material zur Anwendung kommen. Die Mittel können z. B. in die Wandung des Führungsrohres integrierte Kanäle mit Durchbrüchen an den entsprechenden Stellen oder auch flexible, manuell positionierbare Leitungen sein.

Ein bevorzugtes Ausführungsbeispiel der Erfindung wird im folgenden anhand einer Zeichnung näher erläutert. Die Figuren der Zeichnung zeigen im einzelnen:

Figur 1 einen Späneabförderer gemäß Erfindung im Längsschnitt entlang seiner Längsachse und

Figur 2 den Späneabförderer aus Figur 1 in Seitenansicht im Einbauzustand in einer Strehlmaschine,

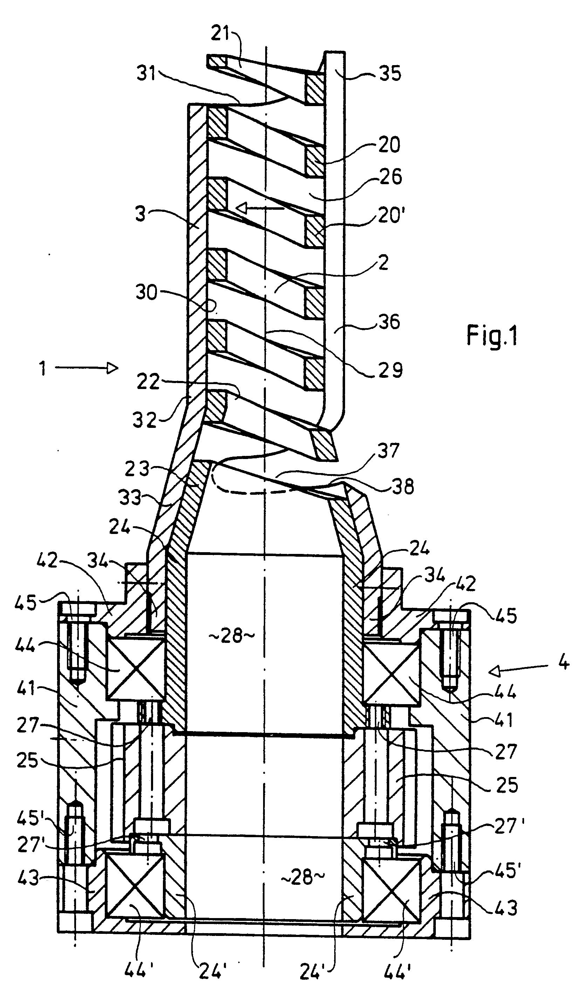

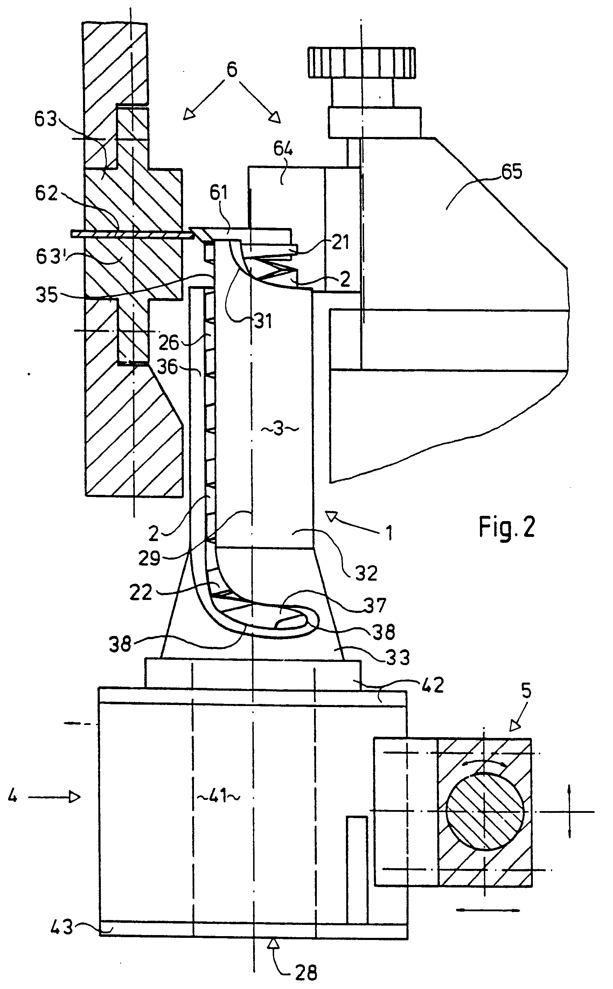

Wie sowohl aus Figur 1 als auch aus Figur 2 ersichtlich ist, besteht das dargestellte Ausführungsbeispiel des Späneabförderers im wesentlichen aus einer Wendel 2, einem diese umgebenden Führungsrohr 3 und einem diese beiden Teile tragenden Sockel 4. Die Wendel 2 ist eine gestreckte Hohlwendel, deren benachbarte Windungen 20 und 20' einen Zwischenraum 26 einschließen. An ihrem oberen Ende 21 läuft die obere Windung spitz zu. In ihrem unteren Teil 22 erweitert sich die Wendel 2 nach außen und geht dann in einen kegelstumpfmantelförmigen Fußteil 23 über. An diesen schließt sich einstückig ein hohlzylinderförmiges Lagerglied 24 an. Der Hohlraum im Inneren der Hohlwendel 2 wird also nach unten hin durch einen sich zunächst erweiternden und dann einen konstanten Durchmesser aufweisenden Hohlraum 28 fortgesetzt.

Außenseitig ist die Wendel 2 einschließlich des Fußes 23 sowie des oberen Teils des Lagergliedes 24 unter Ausbildung eines möglichst geringen Abstandes zur Rohrinnenseite 30 von dem Führungsrohr 3 umgeben. Demgemäß erweitert sich auch das Führungsrohr 3 in seinem unteren Teil 32 zu einem Rohrfußteil 33, an welchen sich nach unten noch ein hohlzylinderförmiger Befestigungsteil 34 anschließt. Das Führungsrohr 3 ist mit einem in Längsrichtung des Rohres 3 verlaufenden Schlitz 36 versehen, der sich im unteren Teil 32 bzw. Fußteil 33 des Rohres 3 einer mehr in Umfangsrichtung des Rohres 3 mit einer zur Steigung der Wendel 2 entgegengesetzt gerichteten Steigung fortsetzt. Dieser Fortsatz des Schlitzes 36 ist in den Figuren mit der Bezugsziffer 37 versehen.

Wie aus beiden Figuren weiterhin ersichtlich ist, ist das obere Ende 31 des Führungsrohres 3 wendelartig abgeschnitten, wobei die Steigung des Rohrendes 31 der Steigung der Wendel entgegengerichtet ist. Der wendelförmige Schnitt ist dabei so gelegt, daß sich im Bereich des oberen Endes des Schlitzes 36 ein Höhensprung der Rohrwandung ergibt. Bei Rotation der Wendel 2 läuft deren oberes Ende 21 dabei auf den höheren Wandungsteil 35 des Führungsrohres 3 zu.

Im unteren Teil der Figur 1 ist die Lagerung sowie der Antrieb der Wendel 2 des Späneabförderers 1 erkennbar. Auf dem Umfang des bereits erwähnten Lagergliedes 24 der Wendel 2 ist ein Wälzlager 44 angeordnet, das mit seiner Außenseite an der Innenseite eines Sockelgehäuses 41 des Sockels 4 anliegt. Nach unten schließt sich an das Lagerglied 24 ein Antriebsglied 25 an, das im Ausführungsbeispiel mit auf seiner Außenseite angeordneten Zähnen zum Eingriff eines Zahnrades versehen ist. Ober Verschraubungen 27 ist das Antriebsglied 25 mit dem Lagerglied 24 kraftschlüssig verbunden. An das Antriebsglied 25 schließt sich nach unten wiederum ein Lagerglied 24' an, das ebenfalls durch Verschraubungen, hier mit 27' bezeichnet, mit dem Antriebsglied 25 verbunden ist. Das Lagerglied 24 trägt auf seiner Außenseite ein Wälzlager 44', das seinerseits mit seiner Außenseite an dem Bodenteil 43 des sockels 4 anliegt. Der Bodenteil 43 des Sockels 4 sowie das Sockelgehäuse 41 sind mittels Verschraubungen 45' miteinander verbunden. Nach oben hin wird das Sockelgehäuse 41 von einem mit dem Befestigungsteil 34 des Führungsrohres 3 drehfest verbundenen Deckelteil 42 abgeschlossen. Deckelteil 42 und Sockelgehäuse 41 sind ebenfalls über Verschraubungen 45 miteinander verbunden. Da sowohl die beiden Lagerglieder 24 und 24' als auch das Antriebsglied 25 im wesentlichen hohlzylinderförmig ausgebildet sind, ergibt sich ein durchgehender Förderhohlraum 28 von der Wendel 2 bis durch den Bodenteil 43 des Sockels 4 hindurch.

Aus Figur 2 ist besonders deutlich der Verlauf des Schlitzes 36 mit seiner Fortsetzung 37 im Führungsrohr 3 erkennbar. Wie aus der Figur 2 weiter ersichtlich ist, ist die Fortsetzung 37 des Schlitzes 36 mit einer Schneidkante 38 versehen, die der an der Innenseite des Führungsrohres 3 entlanglaufenden Wendel 2 bzw. deren unteren Teil 22 zugewandt ist. Nach unten schließt sich der - wie aus der Figur ersichtlich - seitlich und nach oben geschlossene Sockel 4 des Späneabförderers 1 an. Somit können Späne oder Teile davon nicht in die Lager- und Antriebsglieder geraten.

Weiterhin ist in dem dargestellten Ausführungsbeispiel noch vorgesehen, daß eine Verstellung des Späneabförderers 1 in mehreren Koordinaten ermöglicht wird. Hierzu sind Mittel 5 vorgesehen, die seitlich an den Sockel 4 angebaut sind, und die eine Verstellung des Späneabförderers in der Höhe, in der horizontalen Position sowie in seiner Neigung gegen die Vertikale gestatten. Derartige Mittel sind an sich bekannt und brauchen daher in diesem Zusammenhang nicht näher beschrieben zu werden.

Aus der Figur 2 ist weiterhin die Integration des Späneabförderers in eine Maschine, hier eine Strehlmaschine 6, ersichtlich. In einer Strehlmaschine wird ein Metallband 62, das zwischen zwei Linealen 63 und 63' geführt wird, von einem Werkzeug 61, hier ein Schneidstahl zur Brechung einer Bandkante, spanabhebend bearbeitet. Das Werkzeug 61 wird in einem Werkzeughalter 64 gehalten und ist über einen Werkzeugschlitten 65 in seiner Position relativ zum Metallband 62 einstellbar. Das obere Ende 21 der Wendel 2 des Späneabziehers ist in unmittelbarer Nähe des Werkzeuges 61 angeordnet. Hierdurch wird sichergestellt, daß von dem Werkzeug 61 erzeugte Späne von dem Späneabförderer erfaßt und abgeführt werden. Wie aus der Figur ersichtlich ist, läßt sich der Späneabförderer 1 gemäß der vorliegenden Erfindung auch bei beengten Platzverhältnissen zwischen den Linealen 63 und 63' bzw. deren Trägern einerseits und dem Werkzeugschlitten 65 andererseits noch problemlos unterbringen.

Die Funktionsweise des Späneabförderer 1 soll im folgenden anhand der Figur 2 kurz beschrieben werden. Von dem Werkzeug 61 erzeugte Späne werden von dem freien Ende 21 der Wendel 2 des Späneabförderers 1 erfaßt und ein Stück weit durch die Drehbewegung der Wendel 2 mitgenommen. Spätestens nach einem Umlauf der Wendel 2 stoßen die Späne bzw. das mitgenommene Spänegemenge gegen den nach oben vorragenden höheren Rohrbereich 35 am oberen Ende 31 des Führungsrohres 3. Hierdurch werden die Späne an einer weiteren Rotation gehindert und stattdessen durch die rotierende Wendel entlang des Schlitzes 36 nach unten gefördert, bis sie den unteren Teil 22 der Wendel bzw. 37 des Schlitzes 36 erreicht haben. In diesem Bereich des Späneabförderers 1 erfolgt unter Mitwirkung der Schneidkanten 38 eine Zerschneidung der geförderten Späne nach Art einer Schere. Hiernach können die nach außen ragenden Späneteile über den Rohrfußteil 33 sowie über den Deckelteil 42 und die Außenseite des Sockelgehäuses 41 des Sockels 4 frei nach unten fallen. Die nach innen, d. h. in das innere des Rohres 3 bzw. der Wendel 2 ragenden Späneteile können nach dem Zerschneiden durch den Förderhohlraum 28 im Inneren des Wendelfußes 23, des Rohrfußteils 33 und der im Sockel 4 angeordneten Lager- und Antriebsglieder 24, 24' und 25 ebenfalls frei nach unten fallen. Späneansammlungen oder -staus in irgendeinem Teil des Späneabförderers 1 sind somit wirkungsvoll ausgeschlossen.

## Patentansprüche

1. Späneabförderer für Maschinen, die eine spanabhebende Bearbeitung von insbesondere metallischen Werkstücken durchführen, wie Strehlmaschinen, Drehmaschinen usw., wobei der Späneabförderer eine um ihre Längsachse rotierende gestreckte Wendel (2) mit im Abstand zueinander verlaufenden Windungen (20) aufweist, deren freies oberes Ende in den Spanaustrittsbereich des spanerzeugenden Werkzeuges (61) der Maschine ragt, und mittels derer die erzeugten Späne zur Sicherstellung eines unbehinderten Bearbeitungsablaufes aus der Werkzeugumgebung abgefördert werden, wobei die Wendel (2) als Hohlwendel ausgebildet ist und außenseitig unter Ausbildung eines engen Zwischenraumes von einem unverdrehbaren Führungsrohr (3) umgeben ist, dadurch gekennzeichnet, daß das Führungsrohr (3) mit einem in Rohrlängsrichtung verlaufenden, nach oben offenen Schlitz (36, 37) versehen ist, wobei das obere Ende (21) der Wendel (2) frei aus dem Rohr (3) herausragt und daß sich der Schlitz (36, 37) im unteren, werkzeugfernen Teil (32) des Rohres (3) aus der Längsrichtung des Rohres (3) in einer mehr in Umfangsrichtung des Rohres (3) und in Rotationsrichtung der Wendel (2) verlaufenden Richtung mit einer zur Steigung der Wendel (2) entgegengesetzten Steigung fortsetzt.

2. Späneabförderer nach Anspruch 1, dadurch gekennzeichnet, daß die untere Fortsetzung (37) des Schlitzes (36, 37) mit einer der Wendel (2) zugewandten Schneidkante (38) versehen ist.

3. Späneabförderer nach den Ansprüchen 1 oder 2, dadurch gekennzeichnet, daß das obere Ende (31) des Rohres (3) wendelartig mit einer der Steigung der Wendel (2) entgegengesetzten Steigung abgeschnitten ist, derart, daß sich im Bereich des Schlitzes (36) ein Höhensprung des Rohrendes (31) ergibt, wobei die Wendel (2) bei ihrer Rotation auf den höheren Rohrbereich (35) zuläuft.

4. Späneabförderer nach einem der Ansprüche 1 bis 3, dadurch gekennzeichnet, daß die Breite des Schlitzes (36, 37) im Führungsrohr (3) etwa das 0,05 - 0,2fache des Umfanges des Rohres (3) beträgt und daß die Länge der unteren Fortsetzung (37) des Schlitzes (36, 37) etwa das 0,25 - 0,5fache des Umfanges des Rohres (3) beträgt.

5. Späneabförderer nach einem der Ansprüche 1 bis 4, dadurch gekennzeichnet, daß der Querschnitt der einzelnen Windungen (20, 20') rechteckig ist, wobei die äußere Seite in engem bis minimalem Abstand parallel zur Innenseite (30) des Führungsrohres (3) verläuft.

6. Späneabförderer nach einem der Ansprüche 1 bis 5, dadurch gekennzeichnet, daß die Wendel (2) einen sich erweiternden, hohlen Fußteil (23) aufweist, der außenseitig von einem sich entsprechend erweiternden Rohrfußteil (33) umgeben ist.

7. Späneabförderer nach einem der Ansprüche 1 bis 6, dadurch gekennzeichnet, daß unterhalb des Fußteils (23) der Wendel (2) mit dieser einstückige oder kraftschlüssig verbundene, im wesentlichen hohlzylinderförmige Lager- und Antriebsglieder (24, 24'; 25) angeordnet sind.

8. Späneabförderer nach einem der Ansprüche 1 bis 7, gekennzeichnet durch Mittel (5) zur Höhenverstellung gegenüber dem Werkstück (62) und/oder dem spanerzeugenden Werkzeug (61).

9. Späneabförderer nach einem der Ansprüche 1 bis 8, gekennzeichnet durch Mittel (5) zur horizontalen Verschiebung gegenüber dem Werkstück (62) und/oder dem spanerzeugenden Werkzeug (61) und/oder durch Mittel (5) zur Neigungsverstellung seiner Längsachse (29) gegenüber der Vertikalen.

10. Späneabförderer nach einem der Ansprüche 1 bis 9, gekennzeichnet durch Mittel zur Zuführung und Ausbringung von Kühl- und Gleitflüssigkeit in den Bereich zwischen Wendel (2) und Rohrinnenseite (30) und/oder den Bereich der Schneidkanten (38) am Schlitz (36, 37) des Rohres (3).

**Revendications**

1. Extracteur de copeaux pour machines mettant en oeuvre une opération d'énlèvement de copeaux, notamment sur des pièces à usiner métalliques, machines telles que des peigneuses, des tours etc, l'extracteur de copeaux comporte une hélice (2) allongée, tournant autour de son axe longitudinal et comportant des spires (20) situées à distance les unes des autres, dont l'extrémité supérieure libre se prolonge dans la région de sortie des copeaux de l'outil (61) de la machine producteur de copeaux, et au moyen de laquelle les copeaux produit sont extraits hors des environs de l'outil, pour assurer un processus d'usinage sans obstacle, l'hélice (2) étant réalisée sous la forme d'une hélice creuse et étant entourée du côté extérieur par un tube de guidage (3) non rotatif dont elle est séparée par un intervalle étroit, caractérisé en ce que le tube de guidage (3) est pourvu d'une fente (36, 37) ouverte vers le haut qui s'étend dans la direction longitudinale du tube, l'extremité supérieure (21) de l'hélice (2) faisant saillie librement hors du tube (3), et en ce que la fente (36, 37) se prolonge dans la partie inférieure (32) du tube (3) eloignée de l'outil, dans une direction qui s'écarte de la direction longitudinale du tube vers la direction du périmètre du tube (3) et de la rotation de l'hélice (2), avec une pente inversée par rapport à la pente de l'hélice (2).

2. Extracteur de copeaux selon la revendication 1, caractérisé en ce que le prolongement inférieur (37) de la fente (36, 37) est muni d'une arête coupante (38) accolée à l'hélice (2).

3. Extracteur de copeaux selon les revendications 1 ou 2, caractérisé en ce que l'extrémité supérieure (31) du tube (3) est découpée de façon hélicoïdale avec une pente inversée par rapport à la pente de l'hélice (2), de manière à obtenir un saut vertical de l'éxtremité du tube (31) dans la région de la fente (36), l'hélice (2) atteignant lors de sa rotation la région supérieure du tube (35).

4. Extracteur de copeaux selon l'une des revendications 1 à 3, caractérisé en ce que la largeur de la fente (36, 37) dans le tube de guidage (3) est d'environ 0,05 - 0,2 fois le périmètre du tube (3), et en ce que la longueur du prolongement inférieur (37) de la fente (36, 37) est d'environ 0,25 - 0,5 fois le périmètre du tube (3).

5. Extracteur de copeaux selon l'une des revendications 1 à 4, caractérisé en ce que la section des spires individuelles (20, 20') est carrée, la face extérieure s'étendant parallèlement à la face intérieure (30) du tube de guidage (3) avec un écart restreint, voire minimum.

6. Extracteur de copeaux selon l'une des revendications 1 à 5, caractérisé en ce que l'hélice (2) comporte un pied creux (23) qui s'élargit, et qui est entouré du côté extérieur par un pied du tube (33) s'élargissant de manière correspondante.

7. Extracteur de copeaux selon l'une des revendications 1 à 6, caractérisé en ce qu'il comporte en dessous du pied (23) de l'hélice (2), des éléments de positionement et d'entraînement (24, 24'; 25) ayant sensiblement une forme cylindrique creuse et réalisés d'une seule pièce avec ledit pied ou solidaire de celui-ci.

8. Extracteur de copeaux selon l'une des revendications 1 à 7, caractérisé par des moyens (5) d'ajustage en hauteur par rapport à la pièce à usiner (62) et/ou par rapport à l'outil (61) producteur de copeaux.

9. Extracteur de copeaux selon l'une des revendications 1 à 8, caractérisé par des moyens (5) de déplacement horizontal par rapport à la pièce à usiner (62) et/ou par rapport à l'outil (61) producteur de copeaux, et/ou par des moyens (5) de réglage d'inclinaison de son axe longitudinal (29) par rapport à la verticale.

10. Extracteur de copeaux selon l'une des revendications 1 à 9, caractérisé par des moyens pour faire entrer et sortir un liquide de refroidissement et de lubrification dans la région située entre l'hélice (2) et la face intérieure du tube (30) et/ou dans la région de l'arête de coupe (38) de la fente (36, 37) du tube (3).

## Claims

1. A swarf remover for machines which perform cutting, more particularly of metal workpieces, such as chasing machines, lathes, etc., the swarf remover having an elongated helix (2) which is rotatable about its longitudinal axis and has mutually spaced coils (20), of which helix the free upper end projects into the swarf exit region of the swarf producing tool (61) of the machine, and by means of which helix the swarf produced is carried away from the vicinity of the tool to ensure that the cutting process is unimpeded, the helix (2) being in the form of a hollow helix and embraced externally by a non-rotatable guide tube (3), leaving a narrow gap, characterised in that the guide tube (3) is provided with an upwardly open slot (36, 37) extending in the longitudinal direction of the tube, the upper end (21) of the helix (2) projecting freely from the tube (3), and the slot (36, 37) is continued, in the lower portion (32) of the tube (3) remote from the tool, out of the longitudinal direction of the tube (3) in a direction more in the peripheral direction of the tube (3) and in the direction of rotation of the helix (2), with an inclination contrary to the inclination of the helix (2).

2. A swarf remover as claimed in claim 1, characterised in that the lower continuation (37) of the slot (36, 37) is provided with a cutting edge (38) directed towards the helix (2).

3. A swarf remover as claimed in claim 1 or 2, characterised in that the upper end (31) of the tube (3) is cut off helically with an inclination contrary to the inclination of the helix (2), in such a way as to produce in the vicinity of the slot (36) a projecting part of the tube end (31), the helix (2) as it rotates running towards the higher tube portion (35).

4. A swarf remover as claimed in any of claims 1 to 3, characterised in that the width of the slot (36, 37) in the guide tube (3) is approximately 0.05 to 0.2 times the circumference of the tube (3), and the length of the lower continuation (37) of the slot (36, 37) is approximately 0.25 to 0.5 times the circumference of the tube (3).

5. A swarf remover as claimed in any of claims 1 to 4, characterised in that the cross-section of the individual coils (20, 20') is rectangular and the outer side runs parallel to and at a small to minimal distance from the interior (30) of the guide tube (3).

6. A swarf remover as claimed in any of claims 1 to 5, characterised in that the helix (2) has a flaring, hollow foot portion (23) which is embraced externally by a correspondingly flaring tube foot portion (33).

7. A swarf remover as claimed in any of claims 1 to 6, characterised in that there are below the foot portion (23) of the helix (2) substantially hollow-cylindrical bearing and driving members (24, 24'; 25) integral with or positively connected to the helix.

8. A swarf remover as claimed in any of claims 1 to 7, characterised by means (5) for adjusting the height relative to the workpiece (62) and/or the swarf-producing tool (61).

9. A swarf remover as claimed in any of claims 1 to 8, characterised by means (5) for horizontal displacement relative to the workpiece (62) and/or the swarf-producing tool (61) and/or by means (5) for adjusting the inclination of its longitudinal axis (29) relative to the perpendicular.

10. A swarf remover as claimed in any of claims 1 to 9, characterised by means for supplying and discharging coolant and lubricant to the region between the helix (2) and the tube interior (30) and/or the region of the cutting edges (38) on the slot (36, 37) in the tube (3).

Fig.1

Fig. 2